# EUROPEAN PATENT APPLICATION

(11) **EP 3 048 333 A1**
(43) Date of publication of application: **27.07.2016**
(21) Application number: 16150407.1
(22) Date of filing: 07.01.2016
(51) Int. Cl.: F16F 15/00, F16F 15/18

(54) **METHOD AND SYSTEM FOR DAMPING TORSIONAL OSCILLATIONS**

(30) Priority: 23.01.2015 GB 201501135
(71) Applicant: Rolls-Royce plc, London SW1E 6AT (GB)
(72) Inventor: Gajanayake, Chandana, Derby, Derbyshire DE24 8BJ (GB); Gupta, Amit, Derby, Derbyshire DE24 8BJ (GB); Slater, Robert, Derby, Derbyshire DE24 8BJ (GB); Bhangu, Bikramjit, Derby, Derbyshire DE24 8BJ (GB); Vilathgamuwa, Don, Derby, Derbyshire DE24 8BJ (GB); Beng, Gilbert, Derby, Derbyshire DE24 8BJ (GB)
(74) Representative: Rolls-Royce plc

(57) **Abstract**

This disclosure concerns the damping of torsional oscillations/vibrations, particularly during electrical power generation within a gas turbine such as a civil aviation engine. The method of the disclosure relies on actively generating compensating oscillations in a driveline (10,12,14,16) of a system (2) to actively damp undesirable oscillations existing in the system (2).

## Description

### FIELD OF THE DISCLOSURE

The present disclosure relates to the damping of torsional oscillations/vibrations and particularly, but not exclusively, to the damping of torsional oscillations/vibrations during electrical power generation within a gas turbine such as a civil aviation engine.

### BACKGROUND OF THE DISCLOSURE

The increased desire for electrical power in both civil and defence aircraft has led to an increase in aircraft on-board power generation. Typically, one or more electrical generators is connected into the gas turbine through a driveline consisting of slender shafts and a gear train that would transmit the power across multiple generators and other supporting systems, such as an oil pump and/or fuel pump, which are mounted in the fan casing. However, drive line flexibility makes the system susceptible to sustained torsional oscillations which reduce the useful life of the systems and increase the potential for premature failure. These problems are more pronounced for larger generators employed to address the increase demand for power. Mitigation of these factors requires careful design, and frequent maintenance, of the drive line.

The torsional oscillations are excited primarily when there is a change in the electrical power demand, and also sometimes where there is a change in the rotational speed of the gas turbine engine. This changes the torque applied on the machine and hence the drive line. Due to inertial differences and presence of low stiffness in the system, torsional resonance would be excited.

Typically, large civil gas turbine engines are provided with Brushless Synchronous Generators (BLSGs), which operate at variable speeds and are directly connected to an airframe power network. The BLSGs are powered through a gear box and driveline that are connected to the main shaft of the gas turbine, and are controlled using a field excitation system or automatic voltage regulator. The presence of torsional oscillation causes speed variations in the generator which can cause fluctuations in generator output voltage, active and reactive power, and may generate harmonic voltages and currents or other frequency components based on the system parameters.

Due to the presence of one or more generators and multiple other loads, the driveline system commonly found in aerospace applications forms a complex electro-mechanical system with multiple torsional modes, resulting in torsional oscillations at multiple frequencies. Accurate estimation or observation of torsional modes becomes extremely challenging. Generally, the estimators use mathematical derivations of measured signals, which is known to generate noise requiring filtering before use as a control signal. The use of filters introduces phase error, resulting in a reduction in performance when compensating oscillatory frequency components. Furthermore, since observers are parameter dependant, accurate knowledge of mechanical systems is required. Mismatch between actual system and model parameters would also introduce errors, increasing the risk of uncompensated torsional oscillations in the driveline at operating conditions.

In the prior art, torsional oscillations have been controlled by controlling an auxiliary power supply, which is connected in the air fame power network, to generate compensating harmonics which suppress the oscillatory models generated at the BLSG as a result of torsional vibrations.

For example, US 2012/0104842 describes a system for controlling torque operations on the shaft of a generator found in an aero engine. The problem identified in US 2012/0104842 is that the typical means of controlling the magnetising current in the rotor windings of a wound field synchronous generator using an Automatic Voltage Regulator (AVR) cannot respond quickly enough to sudden or rapidly fluctuating demands for power. This can result in the additional power generation being received out of phase with the demand, so that further compensation is required, leading to increased fluctuations in the demand from the generator and therefore torque oscillations in the generator and in the mechanical drive train. To overcome this problem, an auxiliary power supply is provided to compensate for rapid/transient changes in power demand. The auxiliary power supply acts as a source or sink as required to either add power to the generator output or bleed off excess power as required. The operation of the generator then only needs to be changed when a more sustained increase or decrease of power is required, and this is achieved as before.

By minimising the number of changes to the demand from the generator, and by avoiding the need for large sudden changes in demand, the number of instances where there is a risk of generating oscillations within the system is reduced. However, the prior art system provides no solution to oscillations generated in instances where the demand on the generator still has to be changed, for example at the beginning of a prolonged step change in power demand.

It is an object of the present disclosure to address this unresolved problem.

### BRIEF SUMMARY OF THE DISCLOSURE

According to a first aspect of the disclosure there is provided a method for damping torsional vibrations/oscillations as defined in the appended Claim 1. Further beneficial aspects of the disclosure are recited in the associated dependent claims.

The prior art system described above is concerned with minimising the amount of alteration to the generator demand, effectively reducing the number of instances where problematic torsional vibrations will be generated as far as possible. This, however, does nothing to address the problem when the demand on the generator is changed, as it will be when it is dictated that a change is small and/or non-transient. As a result, oscillations can still build up in the system and the cause damage to the drive line.

The solution of the prior art would only be fully effective if the auxiliary power supply could account for any change in demand for power such that the generator could run in a steady state without any alteration in demand. However, in particular in the context of aerospace applications, the acceptable size and weight of the auxiliary power supply is limited so that some changes in demand will inevitably lead to changes in demand on the generator.

The present disclosure instead provides for improved control of the generator itself, altering the demand for a short period of time to compensate for the oscillations that arise from a step change in demand from, for example, an airframe power network. The disclosure actively suppresses the vibrations that would arise in the system due to changes in operation, rather than seeking to avoid the conditions that create them. The disclosure could therefore be used in combination with an auxiliary power supply as described in US 2012/0104842 but could equally be used as a standalone system. When used in combination, the disclosure would allow for a reduction in the size and weight of the auxiliary power supply, which would need to react only to very sudden or rapid fluctuations in demand.

By actively suppressing torsional vibrations, the disclosure improves the reliability and the performance of the shaft and gearbox, and also reduces the risk of damage or failure of components from uncompensated torsional oscillations. Alternatively, or additionally, designed margins of shafts and gear boxes can be relaxed to achieve smaller component size and thereby reduced weight.

Preferably the presence of oscillations in the driveline is determined by determining a rotational speed difference between the turbine and the generator or motor.

A further drawback of prior art systems is that the compensating voltage harmonics are typically determined and generated by observing the voltage and power. Generally this type of observation requires a band pass filter to extract the oscillatory components. However filters are non-ideal since they introduce phase delays into the reference signal which could lead to inadequate or partial compensation of oscillatory components or, in some cases, could even enhance the oscillatory components. It is possible to correct these phase errors, but identification of the correct phase angle of the oscillatory components requires good knowledge of the system dynamics and is therefore difficult. Modelling inaccuracies and non-linearities in the system could also introduce errors into compensating phase error in the compensating harmonic components.

In the present disclosure the oscillations are preferably determined more directly by monitoring the differences in rotation speed of the engine and the generator. A difference in speeds at two ends of the same shaft provides a clear indication that oscillations are present within the shaft, and the magnitude and frequencies of the oscillations can be determined relatively quickly. This method avoids the need for filters, and thus the associated phase delays. Additionally, in more complex systems where there might be a number of rotating components, each rotating mass can effectively be assessed individually, greatly simplifying the process of determining the oscillations in different parts of a system.

The rotational speed of the turbine and/or generator or motor may be measured in order to determine the speed difference, or the rotational speed of one or more components may be estimated to provide sensorless operation.

The disclosure also provides a system for damping torsional oscillations according to the appended Claim 5. Further beneficial aspects of the disclosure are recited in the associated dependent claims.

In one embodiment the system comprises a driveline between a turbine and a generator, preferably a PMSG.

BLSGs are widely used for aerospace applications because they provide the flexibility to operate in wide speed or narrow speed ranges depending on the engine shaft used to bleed the power, and power the airframe network without intermediate power electronics. However, the operating speed of a gas turbine or the output frequency of a BLSG is constrained by the operating frequency limits of the airframe supply electrical frequency. This could reduce the fuel efficiency of an aircraft and it could impose a limitation on operability of the gas turbine.

Due to their high power density and compact construction, Permanent Magnet Synchronous Machines (PMSMs), or Permanent Magnet Synchronous Generators (PMSGs), are now considered one of best candidates for on-board generation. System weight, power density and fuel efficiency are key concerns in such applications, and advances in power electronics and electrical machines make the use of a power electronics controlled PMSG possible. Including a power converter to control the PMSG allows the engine to operate over a wide speed range which is not limited by the airframe electrical frequency requirements. Moreover, power converter driven generators would allow easy paralleling of generators from different shafts which may operate at different speeds and could help to power the aircraft DC electrical loads and power network. Torsional vibrations are damped with the control architecture that modifies a standard inverter driven controller of a PMSG by augmenting the standard controller with torsional vibration damping controllers.

The change in output demand may be a step change in demand from the generator, for example a prolonged step up or down in power demand from an airframe network.

The proposed control method can also be applied to a gas turbine connected with multiple generators or motors such that more than one driveline is present within the system. Control signals may then be provided to each generator or motor based on the oscillations determined in each driveline. This helps to avoid complications within the system resulting from interactions between drivelines and thus simplifies control of the oscillations.

In addition to the direct benefit resulted from torsional vibration damping, the proposed disclosure has added benefits due to use of a power electronics converter. Generators that are connected in different shafts can be paralleled generators, DC aircraft electrical loads etc. The disclosure would help to decouple the generator operation from the airframe frequency and voltage requirement. The disclosure can also decouple the transfer of oscillation and disturbance from one system to another, and this can improve the power quality of airframe and also prevent unwanted harmonics passing into the mechanical system.

This disclosure is related to control of a power generator connected to a gas turbine through a drive line consisting of gearboxes and shafts. This arrangement has multiple torsional oscillation modes. The generator is controlled using a power electronics converter that is controlled to suppress the induced torsional vibration in the driveline.

By improving reliability of the mechanical system the disclosure helps to remove a barrier to the implementation of a system that decouples the engine speed and the electrical frequency.

Wherever practicable, any of the essential or preferable features defined in relation to any one aspect of the disclosure may be applied to any further aspect. Accordingly the disclosure may comprise various alternative configurations of the features defined above.

### BRIEF DESCRIPTION OF THE DRAWINGS

Practicable embodiments of the disclosure are described in further detail below by way of example only with reference to the accompanying drawings, of which:

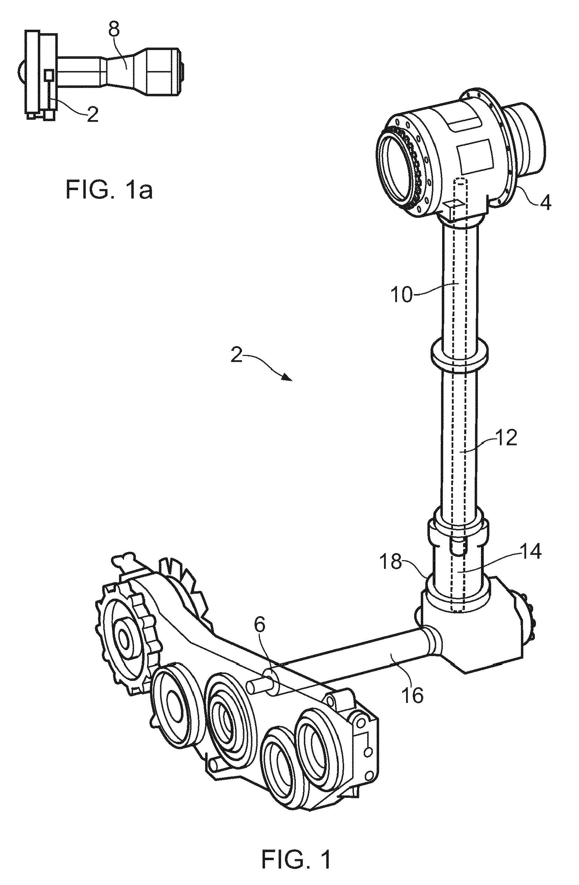

Figure 1 shows an example of an electrical power generation system for use in aerospace applications;
Figure 1 a shows the positioning of the system of Figure 1 on an aircraft gas turbine engine;
Figure 2 shows a flow diagram representing a prior art control method for addressing the problem of oscillations in a generator system such as that shown in Figure 1;
Figure 3 shows a block diagram of a gas turbine connected with a gear box, driveline, generators and other loads;
Figures 4a and 4b show computer simulation results for the example system shown in Figure 3;
Figure 5 shows a block diagram of a system incorporating the vibration damping control of the present disclosure;
Figure 6 shows a flow diagram of the control process; and
Figures 7a and 7b show computer simulation results for the system shown in Figure 3 incorporating vibration damping control according to the present disclosure;

### DETAILED DESCRIPTION OF THE DISCLOSURE

Figure 1 shows a gearbox and shaft arrangement 2 for driving one or more generators. An inlet gearbox 4 is located, in use, within the core of a gas turbine engine. The generators are located together with other rotating loads such as fuel pump and oil pump as shown in an accessory gearbox 6 mounted on the fan casing or core casing of gas turbine engine 8 as illustrated in Figure 1 a. Mechanical power transmission from the inlet gearbox 4 to the accessory gearbox 6 is achieved through a driveline consisting of a number of torsionally flexible shafts 10,12,14,16, and a transfer gearbox 18. Due to the presence of elasticity in the shafts 10,12,14,16 and gearbox 18, this arrangement can suffer from torsional oscillations, which can be detrimental to the overall system performance and the life of the components.

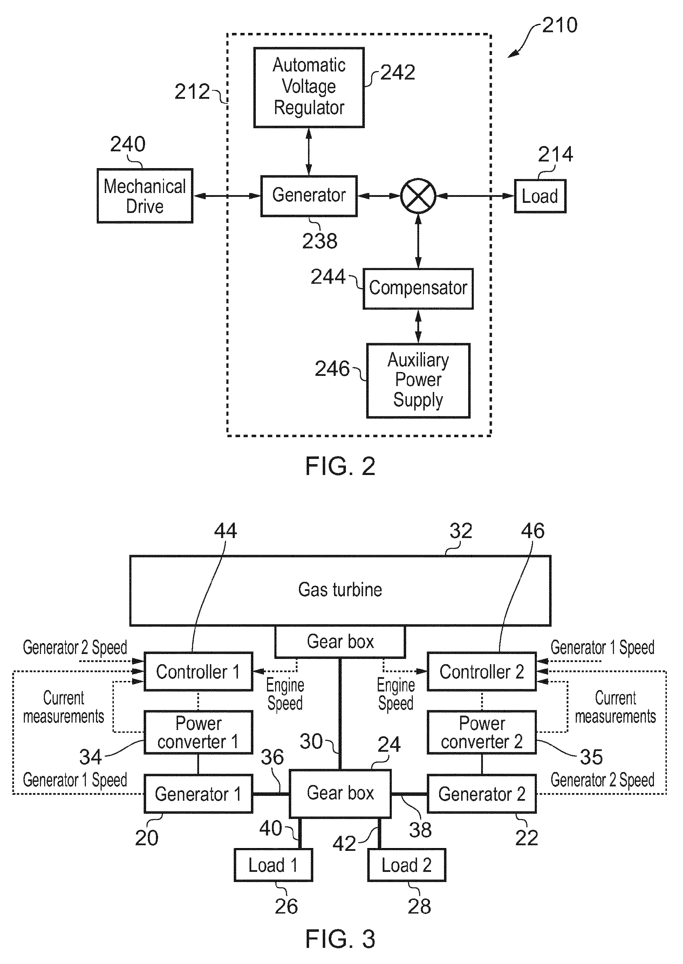

Figure 2, taken from US 2012/0104842, shows a system level diagram of a known control method designed to address the problem of oscillations in a generator driveline. The difference between instantaneous power and average power demand from a load 214 is determined in order to detect a transient change in the electrical load, and this is compared with the known capabilities of the Automatic Voltage Regulator (AVR) 242. If it is determined that the AVR 242 is capable of reacting sufficiently quickly to the change in demand, then the magnetising current of the generator is simply altered by the AVR to account for the change in demand. If it is determined that the AVR 242 is not capable of reacting sufficiently quickly, the generator performance is unchanged and the compensator 244 instead adds or removes power as required using the auxiliary power supply 246 as a source of a sink.

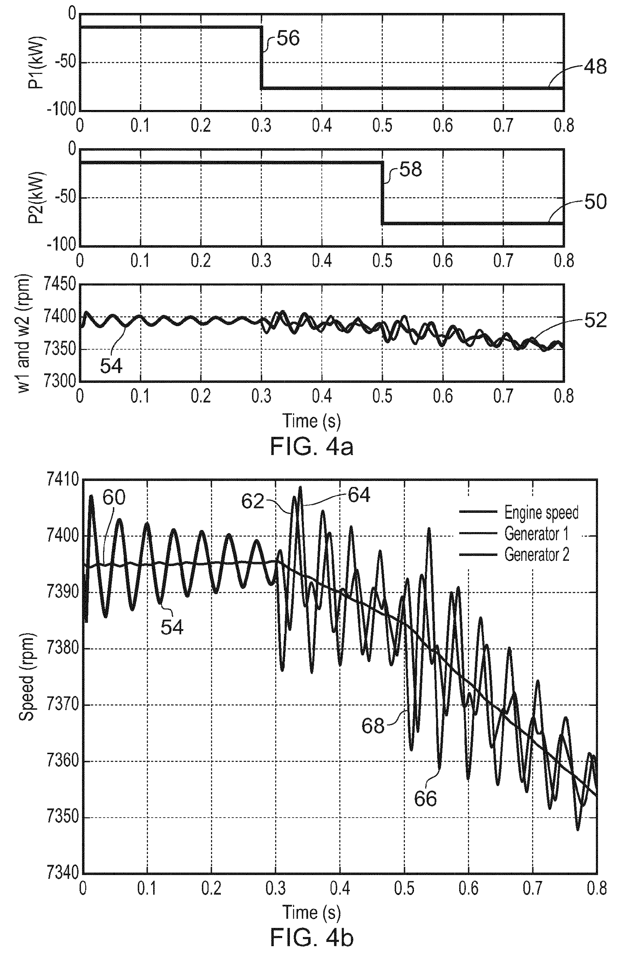

The control system of Figure 2 thus reduces the frequency with which the operation of the generator is modified, and thus reduces the instances where oscillations will be generated in a shaft/linkage. The risk of amplified oscillations from delays in the reaction of the AVR to rapidly fluctuating demand is also reduced. However, as will be seen later in Figures 4a and 4b, if the oscillations are not damped properly they would be sustained for a longer time or may even amplified in generator shafts even when a change in demand is not fluctuating, and the system of Figure 2 does nothing to address this problem.

Additionally, the control system of Figure 2 relies on monitoring active and reactive power and on the determination of the phase of the compensator voltage relative to the generator terminal voltage to determine how and when to add or remove power. This typically requires the use of filters, which can lead to delays in corrective control signals being sent and may result in any corrective signal being out of phase with the oscillation.

In gas turbine applications the gearbox could be connected with multiple different loads. Each of these sub components will have a finite inertia and be connected to one or more gearboxes, within the driveline, each of which will have a finite stiffness. This forms a multi-shaft multi-inertia system having multiple torsional oscillation modes, which causes further control problems because each component will introduce torsional modes with each connected subsystem, related to the inertia of each component, and interaction of them would generate oscillatory components at different frequencies. This further complicates the control of oscillations.

An example of such a system is illustrated in Figure 3. In the example, two 250 kW PMSGs 20,22 are connected to a gear box 24 along with two additional mechanical loads 26,28 such as fuel/oil pumps. The gearbox 24 is connected via a shaft 30 to the gas turbine 32, and further shafts 36,38,40,42 are provided between the gearbox 24 and the generators 20,22 and between the gearbox 24 and the loads 26,28. Each PMSG 20,22 has an associated power converter 34,35 and controller 44,46 to control the respective PMSG 20,22 and keep operation within desired parameters.

The system of Figure 3 has two dominant torsional oscillation modes. The most dominant oscillation mode is introduced by the inertia of the gas turbine 32 and the inertia of the PMSGs 20,22. The other dominant mode results from the inertias of the two PMSGs 20,22. Therefore, the greatest risk of oscillations within the system occurs in the driveline connecting these components, ie shaft 30, gearbox 24 and shaft 36 or 38; or shaft 36, gearbox 24 and shaft 38. Each of the connected loads 26,28 also introduce some torsional oscillatory modes in their associated drivelines and shafts 40,42, due to their respective inertias, but these are typically not significant due to the smaller inertia of fuel and oil pumps. Hence they have minimum impact on the shaft 30 and the gear box 24.

Figure 4a shows three traces 48,50,52 from a computer simulation based on the system of Figure 3. The first two traces 48,50 in Figure 4a indicate the power demand from first and second generators 20,22 connected, via a shaft and gearbox arrangement, to a gas turbine engine 24. The third trace 52 shows the rotational speed of the first and second generators 20,22. One of the key signatures of torsional vibration is that there will be a speed difference between each end of the rotating masses. In this context, the engine 24 and generator 20,22 speeds will show an inconsistent speed ratio or a slight speed difference when generator speed refers to engine speed.

Initially the power demand from both generators 20,22 in Figure 4a is the same. Oscillations or variations 54 can still be seen in the rotational speed of both generators 20,22 in this region, resulting from oscillations in the system from the initiation of the power generating process. The first and second generators 20,22 are then given a load step change of 50kW. The power demanded (P1) from the first generator 20 steps up to the higher, sustained, value at 0.3 seconds 56, shortly before the power demand (P2) from the second generator 22 makes the same step change at 0.5 seconds 58. The power demand, ie power taken from the machine, is shown as negative power in keeping with the sign convention where machine positive power is provided to drive the machine in motoring mode. Interactions within the system mean that both changes in demand 56,58 influence the rotational oscillations in the drivetrain 24,30,36,38, and thus the speed fluctuations in both generators 20,22.

The nature of the oscillations/fluctuations in generator speed can be seen more clearly in Figure 4b, which is an expanded view of the third trace 52 from Figure 4a with the engine speed 60 also plotted for reference. The larger inertia of the engine means that oscillations in the system are not reflected in the engine speed 60, so engine speed 60 provides a reliable reference point for determining oscillations in the system. Both generators 20,22, however, show a significant speed difference and oscillatory response.

The initial oscillations 54 in Figure 4b can be seen to be consistent and uniform for the two generators 20,22. It can also be seen that the oscillations 54 are generally decreasing over time as energy within the system dissipates, but are still present when the step change in power demand 56 from the first generator is experienced. As the step change occurs, the fluctuations in rotational speed 62,64 for both generators 20,22 are amplified and become irregular. The change in the system oscillations for generator one 20 and generator two 22 is not the same, because the step change 56 affects generator one directly and generator two indirectly. The oscillations/fluctuations 62,64 again tend to decrease slightly over time until the step change in demand 58 from the second generator 22, when they are again amplified and become more irregular 66,68. Again, both generators 20,22 are affected, albeit differently, by a step change in demand 58 from generator two.

Although the oscillations do tend to diminish over time, the oscillations 66,68 after the step change in demand 58 from generator two are clearly more severe than the oscillations 54 at the initial stage. The large and irregular oscillations 62,64,66,68 are particularly undesirable both for smooth and/or uniform power generation, and for the fatigue life of shafts and other components within the driveline of the generator system. With insufficient damping in the system, some or all of the energy transfer in the driveline would be stored in the shaft or gear box and may excite or support sustained oscillation. This could lead to life reduction or catastrophic fatigue failure in components.

The preferred example of the present disclosure is related to the control of the electrical power generator to suppress the induced torsional vibration in driveline specifically by controlling a Permanent Magnet Synchronous generator (PMSG). PMSG generated voltages are converted to DC voltage by employing a power converter, which allows the generator to operate independent of the frequency requirements of the airframe. PMSGs also provide other benefits including improved robustness and compact construction.

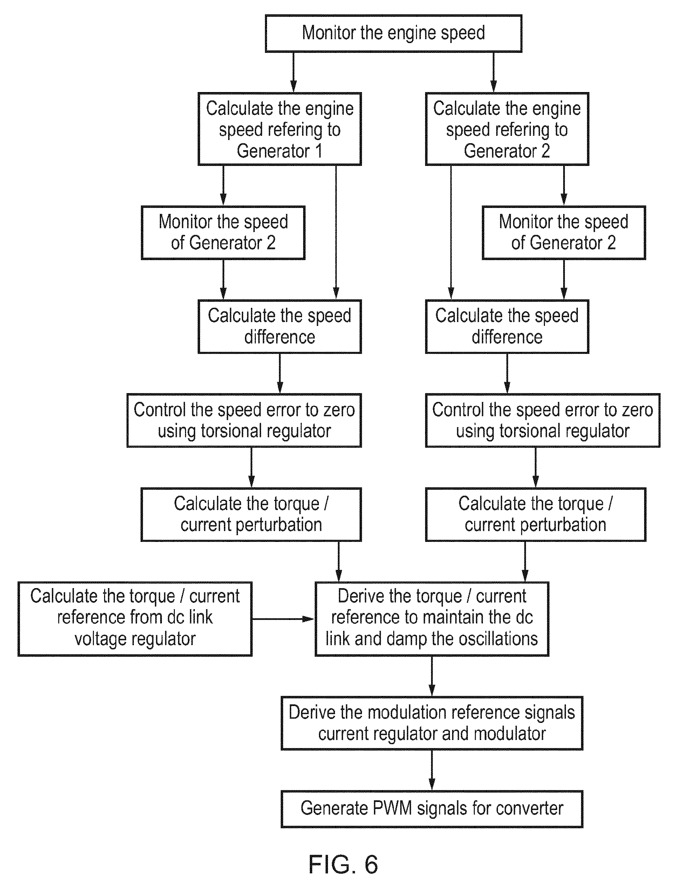

The disclosure proposes an augmented control method that introduces the torsional oscillation damping capability to a standard DC link voltage controller as shown in Figure 6. This can be done by modifying the controller code in the application context.

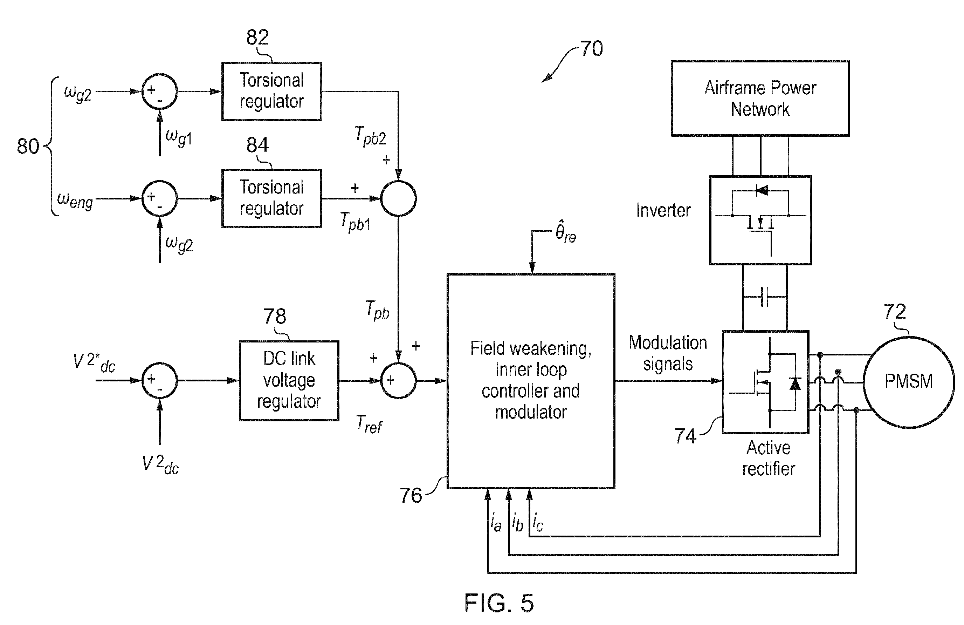

The system 70 shown in Figure 5 provides a PMSG 72 (identified as a Permanent Magnet Synchronous Machine - PMSM) connected to an active rectifier acting as a power converter 74. The power converter 74 is driven by modulation signals from an inner loop controller 76. Figure 5 shows an example of general controller for the PMSG 76, which consists of outer loop DC link regulator 78 in generating switching/modulating signals. The inner loop controller 76 can be implemented in many forms, including stationary reference frame, synchronous reference frame, or direct torque and flux control. Reference signals for the inner loop controller are generated using outer DC link voltage controller 78. According to the disclosure, this standard control 76,78 of the PMSG 72 is modified by augmenting another controller 80 which introduces torque or current perturbation terms *T_{pb}* into the generated torque/current reference *T_{ref}* from the outer DC link voltage controller.

The rotational speed of the engine ω*_{eng}* and the rotational speeds of both generators ω*_{g1}*,ω*_{g2}* are measured and compared to look for speed differences indicative of torsional oscillations in the drivelines connecting the various components. Individual perturbation terms *Tp_{b1}* and *T_{pb2}*, tuned to drive these speed differences to zero, are then generated by a torsional regulator associated with each speed comparison, and the complete set of perturbation terms *T_{pb}* are introduced to the inner loop controller 76 along with the torque reference *T_{ref}* from the DC link voltage controller. The inner loop controller also receives current references and other input values as is standard in the control of a PMSG 72. Instead of employing current control, other embodiments may instead estimate torque, with the controller then providing direct torque control.

The reference generation process for a particular machine is further described in the flow diagram of Figure 6.

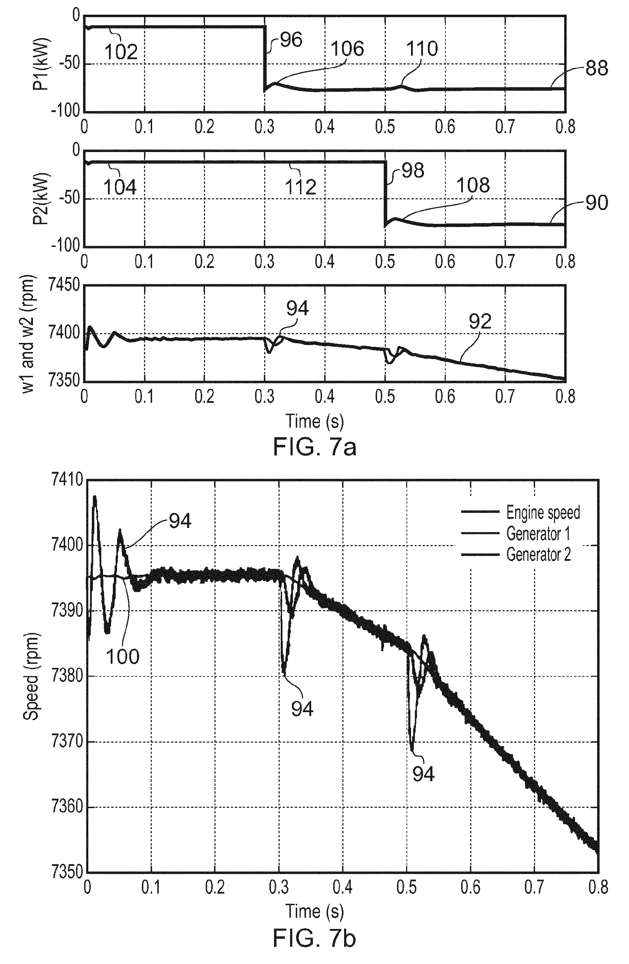

Figures 7a and 7b are similar to Figures 4a and 4b, and illustrate the effect of the control system of the present disclosure. As before, Figure 7a shows the power demand 88,90 from first and second generators 20,22 and the rotational speed 92 of the first and second generators 20,22, and Figure 7b shows the generator speeds 92 plotted along with the engine speed 100. Power demand is shown as negative power as before. The step change in demand 96,98 for each generator is the same magnitude, and occurs at the same time, as shown in Figure 4a, but the oscillations 94 in rotational speed of the two generators are cancelled almost immediately after each change 96,98.

The oscillations are damped by applying small and short-term changes in demand to one or both generators, timed to counteract the oscillations that develop in the system. The first changes 102,104 applied to the first and second generators, to damp the initial oscillations in the system, are barely visible in Figure 7a. Much clearer are the small increase in demand 106 applied to the first generator 20 and the small increase in demand 108 applied to the second generator 22 immediately after each step change in demand 96,98. A small change 110 is also applied to the demand from the first generator 20 shortly after the step change 98 of the second generator 22 to account for the influence of that step change 98 on the driveline 24,30,36 to the first generator 20. Similarly, a small change 112 is applied to the second generator 22 shortly after the step change 96 of the first generator 20.

The small changes 102,104,106,108,110,112 are governed by the control system of the disclosure, and are controlled and timed to compensate for oscillations 94 resulting from each step change 96,98, effectively counteracting the oscillation occurring at that time. The result, as can be seen by comparing Figure 7b with Figure 3b, is that the oscillations 94 in the system are quickly and effectively damped.

Although described as measuring the rotation speed of various components, the proposed augmented controller can be modified to have sensorless operation, where speed of the gas turbine or the generator speed can be estimated by using an observer.

Although primarily focusing on the generating mode, the control method of the disclosure can also be adopted to remove the torsional oscillations in starting mode as well. To achieve this the augmented torsional controller needs to be introduced after the speed controller present in that system.

The proposed control solution is applicable for motor drivers which are connected to mechanical system using a gear box or long shaft. In the motoring mode the proposed controller could still be used, however in such conditions the main outer loop will be a speed controller instead of a dc link voltage controller which generates the torque/current reference for the electrical machine.

The control method can be used for different type of machines, including Interior Permanent Magnet Synchronous Machines (IPMSM), Surface Permanent Magnet Synchronous Machines (SPMSM), induction machines and synchronous machines controlled using a power electronics converter. The disclosure could also be applied to multi machine systems.

The proposed controller can also be used with different control methods, stationary reference frame controllers in the inner loops, hysteresis control, P plus resonance controls.

The torsional regulator may, for example, incorporate proportional integral (PI) control, and could be modified by employing a notch filter which has same frequency as the torsional oscillation mode. In this context one notch filter may have the torsional mode frequency of the gas turbine and generator, and other torsional PI regulator could be supplemented with a notch filter having the torsional mode frequency of the first and second generators.

The disclosure is applicable across all electro mechanical systems which employ rotating electrical machines controlled using power electronics converter.

The power electronics converter could be designed with different power devices, Si/SIC, GaN

Furthermore, developed control algorithms could also be used to damp the torsional vibration when the power converter is not directly coupled to the generator where the converter connected into the power network (eg. active front end converter of large drive) and could also be used to damp the torsional oscillations.

Marine hybrid shaft generator system could be another application where electrical machine and engine collectively drive a common load operation where such torsional oscillation could hinder the operations and the proposed disclosure can be used. The disclosure reduces the risk of shaft failure by sustained torsional oscillation. Similarly, the disclosure could be used in Energy sector where electrical compression system are employed with electrical machine drive by power converters to active control the torsional oscillations. In addition, the disclosure is also applicable to hybrid electrical vehicles, electric trains and industrial drives.

This disclosure could also provide benefits and options at design stage. If effective torsional vibration damping capability could be assumed in the finished product, then the component design could exploit cost and weight savings and/or extend the service life of the components.

Various known control methods allowing wide speed operation for PMSG, such as the control method described in US 2014/0203754 (the disclosure of which is incorporated herein by reference), could be enhanced to have electro mechanical vibration damping capability if used in combination with the control method of the present disclosure.

## Claims

1. A method for damping torsional oscillations (62,64,66,68) in a driveline (10,12,14,16,18) between a turbine (32) and a generator or motor (20,22), the method comprising determining the presence of oscillations (62,64,66,68) in the driveline (10,12,14,16,18) and generating control signals to provide perturbations in the output demand from a generator or motor (20,22) following a change in output from the generator or motor (20,22) or a change in speed of the turbine (32), the perturbations creating tailored oscillations (102,104,106,108,110,112) to counteract the oscillations present in the driveline (10,12,14,16,18).

2. The method as claimed in Claim 1, wherein the presence of oscillations (62,64,66,68) in the driveline (10,12,14,16,18) is determined by determining a rotational speed difference between the turbine (32) and the generator or motor (20,22).

3. The method as claimed in Claim 2, wherein the rotational speed (52) of the turbine (32) and/or generator or motor (20,22) is measured.

4. The method as claimed in Claim 2 or Claim 3 wherein the rotational speed (52) of the turbine (32) and/or motor or generator (20,22) is estimated.

5. A system (70) for damping torsional oscillations (62,64,66,68) in a driveline (10,12,14,16,18) between a turbine (32) and a generator or motor (20,22), comprising a controller for general control of the generator or motor (20,22), means for determining the presence of oscillations (62,64,66,68) in the driveline (10,12,14,16,18) and further control means to generate perturbations in the output demand from the generator or motor (20,22) following a change in output from the generator or motor (20,22) or a change in speed of the turbine (32), the perturbations creating tailored oscillations (102,104,106,108,110,112) to counteract the oscillations (62,64,66,68) present in the driveline (10,12,14,16,18).

6. The system (70) as claimed in Claim 5, wherein the driveline is between a turbine (32) and a generator (20,22).

7. The system (70) as claimed in Claim 6, wherein the generator (20,22) is a Permanent Magnet Synchronous Generator (PMSG) (72).

8. The system (70) as claimed in Claim 6 or Claim 7, wherein the change in output demand is a step change in demand from the generator (20,22).

9. The system (70) as claimed in any one of Claims 5 to 8, wherein more than one generator or motor (20,22) is provided such that more than one driveline (10,12,14,16,18) is present within the system (70).

10. The system (70) as claimed in Claim 9, wherein control signals are provided to each generator or motor (20,22) based on the oscillations (62,64,66,68) determined in each driveline (10,12,14,16,18).

11. The system (70) as claimed in any one of Claims 5 to 10, operated according to the method of any one of Claims 1 to 4.
